# EUROPÄISCHE PATENTSCHRIFT

(11) **EP 2 915 958 B1**
(45) Veröffentlichungstag und Bekanntmachung des Hinweises auf die Patenterteilung: **02.05.2018**
(21) Anmeldenummer: 15153419.5
(22) Anmeldetag: 02.02.2015
(51) Int. Cl.: F01D 9/06, F01D 25/16, F01D 25/24

(54) **Gasturbinenkanalgehäuse**
Gas turbine channel housing
Boîtier de turbine à gaz

(30) Priorität: 05.03.2014 DE 102014203937; 28.05.2014 DE 102014210182
(43) Veröffentlichungstag der Anmeldung: 09.09.2015
(73) Patentinhaber: MTU Aero Engines AG, 80995 München (DE)
(72) Erfinder: Sasse, Stefan, 85238 Petershausen (DE); Metscher, Martin, 81825 München (DE); Hägert, Jan, 82205 Gilching (DE)

(56) Entgegenhaltungen:
- EP-A1- 1 598 566
- EP-A1- 2 784 333
- DE-U1- 20 006 801
- JP-A- H11 325 007
- US-A- 5 451 116
- US-A1- 2003 118 399

## Beschreibung

Die vorliegende Erfindung betrifft ein Gasturbinenkanalgehäuse, eine Gasturbine, insbesondere ein Flugtriebwerk, mit einem solchen Gasturbinenkanalgehäuse und ein Verfahren zum (De)Montieren eines solchen Gasturbinenkanalgehäuses.

Aus der US 5,451,116 A, auf die ergänzend Bezug genommen und deren Inhalt ausdrücklich auch zum Gegenstand der vorliegenden Offenbarung gemacht wird, ist ein Gasturbinenkanalgehäuse nach dem Oberbegriff des Anspruchs 1 bekannt, wobei Bolzen von einer Kanalinnenseite her durch Durchgangsbohrungen gesteckt und ihre Köpfe jeweils mit der Kanalinnenseite verlötet werden.

Eine Aufgabe einer Ausführung der vorliegenden Erfindung ist es, eine Gasturbine mit einem Gasturbinenkanalgehäuse und/oder dessen (De)Montage zu verbessern.

Diese Aufgabe wird durch ein Gasturbinenkanalgehäuse mit den Merkmalen des Anspruchs 1 gelöst. Ansprüche 12, 13 und 14 stellen eine entsprechende Gasturbine bzw. ein Verfahren zum (De)Montieren eines entsprechenden Gasturbinenkanalgehäuses unter Schutz. Vorteilhafte Ausführungsformen der Erfindung sind Gegenstand der Unteransprüche.

Nach einem Aspekt der vorliegenden Erfindung weist ein Gasturbinenkanalgehäuse einer Gasturbine, insbesondere eines Flugtriebwerks, bzw. für eine Gasturbine, insbesondere ein Flugtriebwerk, ein oder mehrere erste Wandsegmente auf, mit dem bzw. denen ein- oder beidseitig jeweils ein in Umfangsrichtung benachbartes zweites Wandsegment, insbesondere lösbar, verbunden ist bzw. wird. Ein zweites Wandsegment kann seinerseits beidseitig mit in Umfangsrichtung benachbarten ersten Wandsegmenten verbunden sein bzw, werden. Insbesondere können also erste und zweite Wandsegmente alternierend miteinander verbunden sein bzw. werden.

Das erste Wandsegment überlappt in einer Ausführung das bzw. die in Umfangsrichtung benachbarten zweiten Wandsegmente in Umfangsrichtung teilweise. In einer anderen Ausführung überlappt umgekehrt das zweite Wandsegment das bzw. die in Umfangsrichtung benachbarten ersten Wandsegmente in Umfangsrichtung teilweise.

Das erste oder zweite Wandsegment weist in einer Ausführung radial innen und/oder außen ein Band, das die Außenseite und eine der Außenseite gegenüberliegende Gaskanalinnenwandung dieses Wandsegments aufweist, und eine Radialstrebe auf, die an der Gaskanalinnenwandung angeordnet ist und sich in einer Weiterbildung von der radial inneren Gaskanalinnenwandung des radial inneren Bandes zu der radial äußeren Gaskanalinnenwandung des radial äußeren Bandes erstreckt. Ein solches Wandsegment wird auch als sogenanntes Fairing bezeichnet.

Das andere, in Umfangsrichtung benachbarte Wandsegment ist in einer Ausführung ein radial inneres oder radial äußeres Panel, das mit dem radial inneren oder äußeren Band dieses Wandsegments verbunden ist bzw. wird. Entsprechend ist in einer Ausführung das erste Wandsegment ein Fairing und das zweite Wandsegment ein Panel, in einer anderen Ausführung umgekehrt das erste Wandsegment ein Panel und das zweite Wandsegment ein Fairing.

Das Gasturbinenkanalgehäuse schließt sich in einer Ausführung in Durchströmungsrichtung stromauf- und/oder abwärts an eine Turbine der Gasturbine an bzw. ist dieser in Durchströmungsrichtung benachbart. In einer Weiterbildung ist das Gasturbinenkanalgehäuse ein sogenannter Turbinenmittelrahmen ("Turbine Center Frame" TCF), der zwischen einer in Durchströmungsrichtung stromaufwärtigen Turbine, insbesondere einer Hochdruckturbine, und einer in Durchströmungsrichtung stromabwärtigen Turbine, insbesondere einer Niederdruckturbine, angeordnet ist und an diese anschließt.

Wenigstens ein erstes und ein diesem in Umfangsrichtung benachbartes zweites Wandsegment, in einer Ausführung mehrere, insbesondere alle ersten und in Umfangsrichtung benachbarten zweiten Wandsegmente, sind bzw. werden in einer Ausführung jeweils durch eine Klammeranordnung reib- oder formschlüssig verbunden.

Die Klammeranordnung weist eine oder mehrere, insbesondere in Axialrichtung der Turbine voneinander beabstandete, Klammern mit jeweils einer Bohrung und Bolzen auf, die diese Bohrungen durchgreifen und auf einer wandsegmentabgewandten Seite der Klammer mit einer Mutter verschraubt sind bzw. werden, die, insbesondere direkt oder über ein Zwischenelement, einen oder mehrere erste Füße der Klammer gegen das erste Wandsegment und einen oder mehrere zweite Füße der Klammer gegen das zweite Wandsegment spannt.

Die Klammer kann insbesondere eine dreifüßige Klammer mit einem ersten Fuß, der sich auf dem ersten Wandsegment abstützt, und zwei zweiten Füßen, die sich auf dem zweiten Wandsegment abstützen, oder mit zwei ersten Füßen, die sich auf dem ersten Wandsegment abstützen, und einem zweiten Fuß sein, der sich auf dem zweiten Wandsegment abstützt. Das Zwischenelement und die Klammer weisen in einer Ausführung komplementäre sphärische Kontaktflächen auf.

Die Klanimer(anordnung) verbindet in einer Ausführung das erste und zweite Wandsegment reibschlüssig, indem sie sich gegen die Spannung durch die Mutter einerseits an dem einen von dem ersten und zweiten Wandsegment und andererseits an dem dieses teilweise überlappende andere von dem ersten und zweiten Wandsegment abstützt und so die beiden Wandsegmente gegeneinander radial verspannt. Zusätzlich oder alternativ kann die Klammer(anordnung) das erste und zweite Wandsegment formschlüssig verbinden, insbesondere sichern, indem wenigstens ein erster und/oder wenigstens ein zweiter Fuß in eine Vertiefung, insbesondere ein Sackloch, in dem ersten und/oder in eine Vertiefung, insbesondere ein Sackloch, in dem zweiten Wandsegment eingreift.

Nach einem Aspekt der vorliegenden Erfindung weist der Bolzen einen Kopf auf, der formschlüssig in einer Nut auf einer kanalabgewandten Außenseite des ersten Wandsegments geführt ist bzw. wird. Die Nut weist in einer Ausführung eine oder zwei einander gegenüberliegende Hinterschneidungen in radialer Richtung auf, die den in ihr geführten Kopf des Bolzens in Radialrichtung formschlüssig festlegen. Sie erstreckt sich in einer Ausführung, wenigstens im Wesentlichen, in Axial- oder Umfangsrichtung der Turbine.

Hierdurch kann in einer Ausführung im Gegensatz zu einem Bolzen, der von der Kanalinnenseite her durch die Gaskanalinnenwandung eingesteckt und mit dieser verlötet wird, die Montage und/oder Demontage verbessert werden, indem der Bolzen(kopf) von der Außenseite her in die Nut eingeschoben bzw. aus dieser entfernt wird.

In einer Ausführung ist die Nut gegen eine der Außenseite gegenüberliegende Gaskanalinnenwandung des Wandsegments, wenigstens im Wesentlichen, geschlossen. Hierdurch kann in einer Ausführung im Gegensatz zu einem Bolzen, der von der Kanalinnenseite her durch die Gaskanalinnenwandung eingesteckt wird, die Gaskanalinnenwandung strömungs-, dichtungs-, wärme- und/oder bearbeitungstechnisch verbessert werden bzw. sein. In einer Ausführung wird der in der Nut geführte, von der Gaskanalinnenwandung durch einen Nutgrundwandung getrennte Kopf nicht von einem Arbeitsfluid der Gasturbine angeströmt und so wärmetechnisch weniger beansprucht. Zusätzlich oder alternativ stört er in einer Ausführung die Arbeitsfluidströmung im Gaskanal nicht. Zusätzlich oder alternativ ist in einer Ausführung eine Bearbeitung der im Bereich der Nut, wenigstens im Wesentlichen, geschlossenen Gaskanalinnenwandung einfacher. Zusätzlich oder alternativ ist in einer Ausführung keine Abdichtung einer von einem Bolzen durchgriffenen Bohrung in der Gaskanalinnenwandung erforderlich.

In einer Ausführung ist der Bolzen lösbar, insbesondere stoffschlussfrei mit der Nut, in der Nut geführt. Hierdurch kann in einer Ausführung im Gegensatz zu einem Bolzen, der mit der Gaskanalinnenwandung verlötet ist, die Montage und/oder Demontage verbessert werden.

In einer Ausführung ist die Nut auf einer Stirnseite geschlossen und auf der gegenüberliegenden Stirnseite offen. Hierdurch kann in einer Ausführung der Kopf von der offenen Stirnseite her in die Nut eingeschoben werden und ist in Nuterstreckungsrichtung formschlüssig durch die gegenüberliegende geschlossene Stirnseite gesichert bzw. festgelegt. In einer Ausführung ist die Nut auf beiden Stirnseiten offen. Hierdurch kann in einer Ausführung der Kopf von beiden offenen Stirnseiten her in die Nut eingeschoben bzw. aus dieser entfernt werden.

In einer Ausführung weist die Klammer wenigstens einen Anschlag auf, der die Nut, insbesondere mit Spiel oder wenigstens im Wesentlichen spielfrei, übergreift. Hierdurch kann die Klammer gegen eine entsprechende Verschiebung gesichert werden bzw. sein. In einer Weiterbildung weist die Klammer einen ersten Anschlag und einen zweiten Anschlag auf, die die Nut auf einander gegenüberliegenden Seiten, insbesondere Stirnseiten in Nuterstreckungsrichtung oder Längsseiten parallel zur Nuterstreckungsrichtung, übergreifen und so gegen eine entsprechende Verschiebung in beide Richtungen sichern.

In einer Ausführung greifen ein oder mehrere erste Füße der Klammer in eine Vertiefung, insbesondere ein Sackloch, ein, die bzw. das in dem ersten Wandsegment neben der Nut angeordnet ist. Hierdurch kann in einer Ausführung die Klammer formschlüssig mit Spiel in Nuterstreckungsrichtung gesichert werden bzw. sein.

Die Nut ist in einem vorstehenden Radialvorsprung auf der Außenseite des ersten Wandsegments angeordnet. Hierdurch kann in einer Ausführung die Herstellung der Nut und/oder das Einschieben und/oder Entfernen des Kopfes erleichtert werden.

Zum Montieren des Gasturbinenkanalgehäuses wird in einer Ausführung der Kopf des Bolzens in die Nut auf der Außenseite des ersten Wandsegments eingeschoben und die Mutter mit dem Bolzen verschraubt. Vor, während oder nach dem Einschieben werden in einer Ausführung das erste und zweite Wandsegment in Überlappung gebracht und die Klammer auf den Bolzen aufgesteckt.

Zum Demontieren des Gasturbinenkanalgehäuses wird in einer Ausführung die Mutter von dem Bolzen entfernt, insbesondere abgeschraubt oder -trennt, und der Kopf des Bolzens aus der Nut entfernt, insbesondere ausgeschoben oder abgetragen.

In einer Ausführung ist der Kopf des Bolzens stoffschlüssig mit dem restlichen Bolzen verbunden, insbesondere integral ausgebildet.

In einer anderen Ausführung ist der Bolzen mehrteilig ausgebildet und weist einen Gewindestift mit einem ersten und einem zweiten Außengewinde sowie einen hierzu separat ausgebildeten Kopf mit einem Innengewinde auf, welches, insbesondere direkt oder über eine Gewindehülse, mit dem ersten Außengewinde des Gewindestifts verschraubt wird bzw. ist. Das zweite Gewinde wird bzw. ist mit der Mutter verschraubt, Es kann einen kleineren Durchmesser aufweisen als das erste Gewinde, insbesondere, um vorteilhaft einen Durchmesser der Bohrung der Klammer zu reduzieren. Gleichermaßen kann auch das erste, mit dem Kopf des Bolzens verschraubte Gewinde des Gewindestifts einen kleinere Durchmesser aufweisen als das zweite Gewinde, insbesondere, um vorteilhaft einen Durchmesser des Innengewindes des Kopfes zu reduzieren. In einer anderen Ausführung weisen das erste und zweite Gewinde des Gewindestiftes denselben Durchmesser auf, sie können insbesondere durch zwei Abschnitte eines durchgehenden Gewindes des Gewindestiftes ausgebildet sein.

Vorzugsweise sind das erste und das zweite Gewinde des Gewindestifts in die gleiche Richtung orientiert, d.h. beide im bzw. gegen den Uhrzeigersinn. Auf diese Weise kann verhindert werden, dass beim Anziehen der Mutter, die mit dem zweiten Gewinde in Eingriff steht, gleichzeitig ein Lösen der Schraubverbindung des ersten Gewindes mit dem Kopf des Bolzens erfolgt.

Der separat ausgebildete Kopf kann in einer Ausführung durch Verschrauben mit dem Gewindestift in der Nut, insbesondere gegen deren Hinterschneidung(en), verspannt werden bzw. sein. Entsprechend ist in einer Ausführung der Gewindestift des mehrteiligen Bolzens mit dem in der Nut geführten Kopf des Bolzens verschraubt, um den Kopf in der Nut zu verspannen und so reibschlüssig festzulegen. Hierdurch kann in einer Ausführung vorteilhaft der Bolzen unabhängig von einer Verschraubung mit der Mutter in der Nut festgelegt werde bzw. sein. Vorzugsweise stützt sich der Gewindestift hierzu gegen eine bzw. an einer Nutgrundwandung ab.

Entsprechend wird in einer Ausführung der separat ausgebildete Kopf in die Nut eingeschoben. Vorab, dabei oder anschließend wird der Gewindestift in den Kopf eingeschraubt. Durch (weiteres) Verschrauben des Gewindestiftes mit dem Kopf wird dieser in der Nut bzw. gegen deren Hinterschneidung(en) verspannt und so reibschlüssig festgelegt. Anschließend wird die Mutter mit dem Gewindestift verschraubt und spannt die Klammer gegen das erste und zweite Wandsegment. Um einen solchen Kopf des Bolzens aus der Nut zu entfernen, kann in einer Ausführung umgekehrt die Verschrauben des Gewindestiftes mit dem Kopf gelockert, insbesondere gelöst werden.

In einer Weiterbildung ist der Gewindestift mit dem in der Nut geführten Kopf des Bolzens verdrehgesichert verschraubt, insbesondere stoffschlüssig, vorzugsweise durch ein Schraubezisicherungs-Klebemittel, oder formschlüssig, vorzugsweise durch Einkerben. Vorzugsweise werden Gewindestift und Kopf verdrehgesichert, nachdem der Kopf durch Verschrauben mit dem Gewindestift in der Nut, insbesondere gegen deren Hinterschneidung(en), verspannt worden ist. Hierdurch wird ein unbeabsichtigtes Lösen der Verschraubung von Kopf und Gewindestift verhindert. Um den Kopf aus der Nut zu entfernen, kann in einer Ausführung die Verdrehsicherung des Gewindestiftes mit dem Kopf, insbesondere unter Trennen bzw. Zerstören des Stoffschlusses, überwunden werden, vorzugsweise durch Aufbringen eines entsprechend großen Drehmoments.

In einer Ausführung greift der Bolzen, insbesondere ein mit einem Kopf eines mehrteiligen Bolzens verschraubter Gewindestift, vorzugsweise mit einem aus dem verschraubten Kopf hervorragenden Stirnabschnitt, mit oder ohne Spiel in und/oder quer zur Nuterstreckungsrichtung in eine Vertiefung in radialer Richtung in einer Nutgrundwandung der Nut ein, vorzugsweise stützt er sich in dieser in radialer Richtung ab. Hierdurch kann, insbesondere zusätzlich oder alternativ zu einer reibschlüssigen Festlegung des Kopfes durch das vorstehend erläuterte Verschrauben mit einem separat ausgebildeten Gewindestift, der in die Vertiefung eingreifende Bolzen formschlüssig gegen ein unbeabsichtigtes Ausführen aus der Nut bzw. verliergesichert sein bzw. werden.

In einer Ausführung ist bzw. sind die Minterschneidung(en) der Nut, wenigstens im Wesentlichen, senkrecht zur radialen Richtung. In einer anderen Ausführung ist bzw. sind die Hinterschneidung(en) der Nut schräg bzw. gegen die radiale Richtung geneigt und/oder konvergieren zur Mutter hin. Vorzugsweise schließt bzw. schließen die Hinterschneidungen mit der radialen Richtung einen Keilwinkel ein, der in einer Ausführung wenigstens 15° und/oder höchstens 75° beträgt. Insbesondere zum Hintergreifen solcher schrägen Hinterschneidungen kann in einer Ausführung der, separat oder integral, ausgebildete Kopf des Bolzens keilartig ausgebildet sein. Entsprechend sind in einer Ausführung Kopf und Nut schwalbenschwanzartig ausgebildet bzw. weisen kongruente schräge, gegen die radiale Richtung geneigte Kontaktflächen auf. Hierdurch kann in einer Ausführung vorteilhaft eine Keilwirkung beim Verschrauben des Bolzens mit der Mutter und/oder eines Gewindestifts mit einem Kopf des Bolzens erreicht werden.

Weitere vorteilhafte Weiterbildungen der vorliegenden Erfindung ergeben sich aus den Unteransprüchen und der nachfolgenden Beschreibung bevorzugter Ausführungen. Hierzu zeigt, teilweise schematisiert:
- Fig. 1: einen Teil eines Gasturbinenkanalgehäuses eines Flugtriebwerks nach einer Ausfuhrung der vorliegenden Erfindung in einem Schnitt längs der Linie I-I in Fig. 2;
- Fig. 2: einen Teil des Gasturbinenkanalgehäuses der Fig. 1 in einem Schnitt längs der Linie II-II in Fig. 1;
- Fig. 3: einen Teil eines Gasturbinenkanalgehäuses eines Flugtriebwerks nach einer weiteren Ausführung der vorliegenden Erfindung in einem Schnitt längs der Linie III-III in Fig. 4; und
- Fig. 4: einen Teil des Gasturbinenkanalgehäuses der Fig. 3 in einem Schnitt längs der Linie IV-IV in Fig. 3.

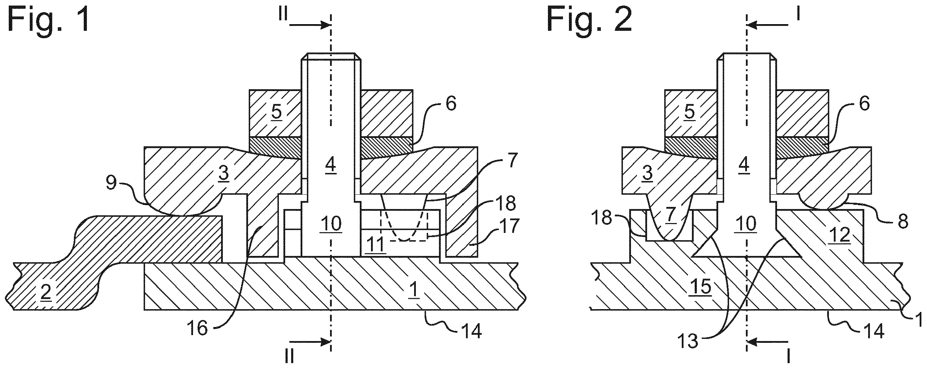

In Fig. 1 und 2 ist in zueinander senkrechten Schnitten, gesehen in Axial- bzw, Durchströmungsrichtung (Fig. 1) bzw. senkrecht hierzu (Fig. 2), ein Teil eines Gasturbinenkanalgehäuses eines Flugtriebwerks nach einer Ausführung der vorliegenden Erfindung in Form eines TCF dargestellt.

Das Gasturbinenkanalgehäuse weist alternierend mehrere erste Wandsegmente in Form sogenannter Fairings 1, von denen in Fig. 1, 2 eines teilweise dargestellt ist, und in Umfangsrichtung (senkrecht zur Zeichenebene der Fig. 2) benachbarte, radial (vertikal in Fig. 1, 2) innere oder äußere Panels 2 auf, von denen in Fig. 1 eines teilweise dargestellt ist. Die Panels 2 überlappen die Fairings 1 in Umfangsrichtung teilweise, wie in Fig. 1 erkennbar, und sind jeweils durch eine Klammeranordnung mit diesen verbunden.

Die Klammeranordnung weist in Axialrichtung der Turbine voneinander beabstandete dreifüßige Klammern 3 auf, von denen in Fig. 1, 2 eine dargestellt ist. Diese weist eine Bohrung auf, die von einem Bolzen 4 durchgriffen wird, der auf einer wandsegmentabgewandten Seite (oben in Fig. 1,2) der Klammer mit einer Mutter 5 verschraubt ist bzw. wird. Die Mutter spannt über ein Zwischenelement 6 zwei erste Füße 7, 8 (vgl. Fig. 2) der dreifüßigen Klammer gegen das Fairing und einen zweiten Fuß 9 der Klammer gegen das Panel.

Der Bolzen weist einen Kopf 10 auf, der stoffschlussfrei formschlüssig in einer Nut 11 auf einer kanalabgewandten Außenseite (oben in Fig. 1, 2) des Fairings geführt ist. Die Nut ist in einem vorstehenden Radialvorsprung 12 auf der Außenseite des Farings angeordnet und weist zwei einander gegenüberliegende Hinterschneidungen 13 in radialer Richtung auf, die den in ihr geführten Kopf des Bolzens in Radialrichtung (vertikal in Fig. 1, 2) formschlüssig festlegen. Sie erstreckt sich im Wesentlichen in Umfangsrichtung der Turbine (horizontal in Fig. 1).

Die Nut ist gegen eine der Außenseite gegenüberliegende Gaskanalinnenwandung 14 des Fairings durch eine Zwischenwand 15 geschlossen und in Nuterstreckungsrichtung (horizontal in Fig. 1) auf beiden Stirnseiten offen.

Die Klammer weist einen Anschlag 16 und einen zweiten Anschlag 17 auf, die die Nut auf einander gegenüberliegenden Stirnseiten in Nuterstreckungsrichtung (links, rechts in Fig. 1) übergreifen und so gegen eine entsprechende Verschiebung des Kopfes in der Nut sichern.

Der eine erste Fuß 7 der Klammer greift in ein Sackloch 18, ein, das in dem Faring neben der Nut angeordnet ist.

Zum Montieren des Gasturbinenkanalgehäuses wird der Kopf 10 des Bolzens 4 in die Nut 11 auf der Außenseite des Fairings 1 eingeschoben und die Mutter 5 mit dem Bolzen verschraubt. Vor, während oder nach dem Einschieben werden Fairing und Panel in Überlappung gebracht und die Klammer 3 auf den Bolzen aufgesteckt.

Zum Demontieren des Gasturbinenkanalgehäuses wird umgekehrt die Mutter 5 von dem Bolzen 4 entfernt und der Kopf 10 des Bolzens aus der Nut 11 entfernt.

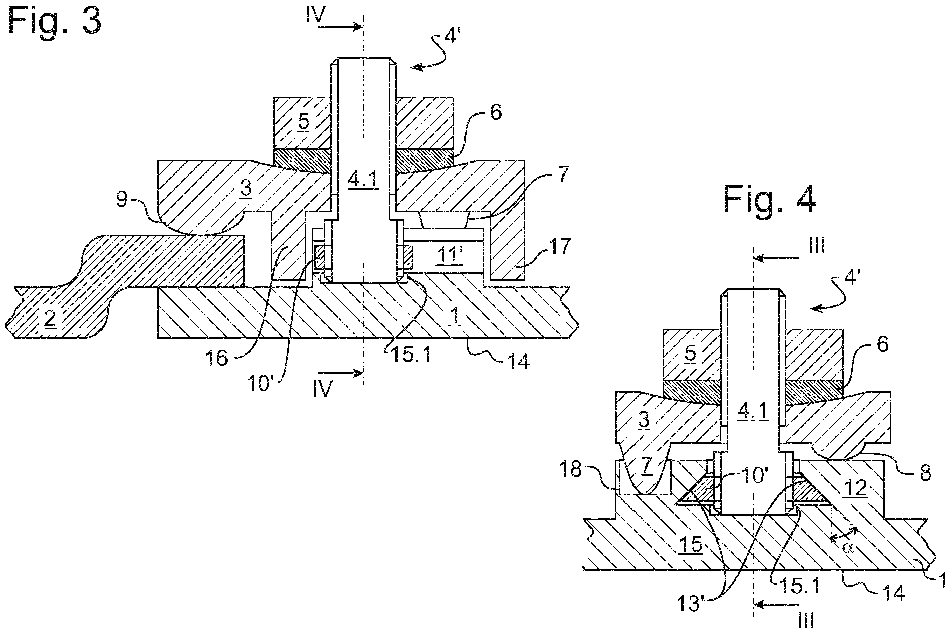

Fig. 3, 4 zeigen in Fig. 1, 2 entsprechender Weise einen Teil eines Gasturbinenkanalgehäuses eines Flugtriebwerks nach einer weiteren Ausführung der vorliegenden Erfindung. Einander entsprechende Merkmale sind durch identische, gegebenenfalls durch einen Apostroph (') differenzierte, Bezugszeichen bezeichnet, so dass hierzu auf die vorstehende Beschreibung Bezug genommen und nachfolgend nur auf Unterschiede eingegangen wird.

In der Ausführung der Fig. 1, 2 ist der Kopf 10 des Bolzens 4 integral mit dem restlichen Bolzen ausgebildet. In der Ausführung der Fig. 3, 4 ist der Bolzen 4' hingegen mehrteilig ausgebildet und weist einen Gewindestift 4.1 mit einem ersten Außengewinde (unten in Fig. 3, 4) und einem zweiten Außengewinde (oben in Fig. 2) sowie einen hierzu separat ausgebildeten Kopf 10' mit einem Innengewinde auf, welches mit dem ersten Außengewinde des Gewindestifts verschraubt wird bzw. ist. Das zweite Gewinde wird bzw. ist in der vorstehend erläuterten Weise mit der Mutter 5 verschraubt. Es weist einen kleineren Durchmesser auf als das erste Gewinde.

In der Ausführung der Fig. 3, 4 sind Kopf 10' und Nut 11' schwalbenschwanzartig ausgebildet. Hierzu sind die Hinterschneidungen 13' der Nut 11' schräg bzw. gegen die radiale Richtung (vertikal in Fig. 3, 4) geneigt und konvergieren zur Mutter 5 hin, der separat ausgebildete Kopf 10' des Bolzens 4' ist entsprechend keilartig ausgebildet. In einer Abwandlung können auch die Hinterschneidungen 13 der Ausführung der Fig. 1, 2 derartig ausgebildet sein. Die Hinterschneidungen 13'schließen mit der radialen Richtung einen Keilwinkel α ein, der in der Ausführung der Fig. 3, 4 45° beträgt.

Zum Montieren des Gasturbinenkanalgehäuses der Ausführung der Fig. 3, 4 wird der separat ausgebildete Kopf 4' in die Nut 11' eingeschoben. Vorab, dabei oder anschließend wird der Gewindestift 4.1 in den Kopf eingeschraubt. Durch weiteres Verschrauben des Gewindestiftes mit dem Kopf wird dieser in der Nut 11' bzw. gegen deren Hinterschneidungen 13' verspannt. Anschließend wird der Gewindestift 4.1 mit dem in der Nut 11' geführten Kopf 10' des Bolzens 4'durch ein Schraubensicherungs-Klebemittel stoffschlüssig verdrehgesichert.

Anschließend wird in vorstehend erläuterter Weise die Mutter 5 mit dem Bolzen 4.1 verschraubt. Vor, während oder nach dem Einschieben und Verspannen des Kopfes 10' in die bzw. der Nut 11' werden Fairing 1 und Panel 2 in Überlappung gebracht, die Klammer 3 auf den Bolzen 4.1 aufgesteckt und die Mutter 5 mit dem Gewindestift 4.1 verschraubt.

In der Ausführung der Fig. 3, 4 greift der mit dem Kopf 10'verschraubte Gewindestift 4.1 mit einem aus dem verschraubten Kopf hervorragenden Stirnabschnitt (unten in Fig. 3, 4) mit Spiel in eine Vertiefung 15.1 in der Zwischen- bzw. Nutgrundwandung 15 ein, die sich in radialer Richtung erstreckt, und stützt sich in dieser in radialer Richtung ab. Hierdurch kann zusätzlich zu der reibschlüssigen Festlegung des Kopfes 10' durch das vorstehend erläuterte Verschrauben mit dem Gewindestift 4.1 der in die Vertiefung 15.1 eingreifende Bolzen 4' formschlüssig verliergesichert werden. Man erkennt, dass auch ohne die Verspannung des Kopfes 10' in der Nut 11' der mehrteilige Bolzen 4' verliergesichert werden bzw. sein kann, wenn der Stirnabschnitt des Gewindestiftes 4.1 so tief in die Vertiefung 15.1 eingreift bzw. eingeschraubt wird bzw. ist, dass der Kopf 10' ein Herausziehen des Gewindestiftes 4.1 formschlüssig durch Anlage an den Hinterscheidungen 13' verhindert. Im beschriebenen Ausfuhrungsbeispiel stützt sich der Gewindestift 4.1 jedoch in der Vertiefung 15.1 in radialer Richtung ab und verspannt so den mit ihm verschraubten Kopf 10' gegen die Hinterschneidungen 13' und somit in der Nut 11' und legt ihn so reibschlüssig fest. Umgekehrt könnte in einer nicht dargestellten Abwandlung der Gewindestift den Kopf in der Nut verspannen, ohne in einer Vertiefung in der Nutgrundwandung einzugreifen und so den Bolzen zusätzlich formschlüssig verlierzusichern.

Obwohl in der vorhergehenden Beschreibung exemplarische Ausführungen erläutert wurden, sei darauf hingewiesen, dass eine Vielzahl von Abwandlungen möglich ist. Außerdem sei darauf hingewiesen, dass es sich bei den exemplarischen Ausführungen lediglich um Beispiele handelt, die den Schutzbereich, die Anwendungen und den Aufbau in keiner Weise einschränken sollen. Vielmehr wird dem Fachmann durch die vorausgehende Beschreibung ein Leitfaden für die Umsetzung von mindestens einer exemplarischen Ausführung gegeben, wobei diverse Änderungen, insbesondere in Hinblick auf die Funktion und Anordnung der beschriebenen Bestandteile, vorgenommen werden können, ohne den Schutzbereich zu verlassen, wie er sich aus den Ansprüchen und diesen äquivalenten Merkmalskombinationen ergibt.

### Bezugszeichenliste

- 1: Fairing (erstes Wandsegment)
- 2: Panel (zweites Wandsegment)
- 3: Klammer
- 4; 4': Bolzen
- 4.1: Gewindestift
- 5: Mutter
- 6: Zwischenelement
- 7, 8: erster Fuß
- 9: zweiter Fuß
- 10; 10': Kopf
- 11; 11': Ntit
- 12: Radial vorsprung
- 13: Hinterschneidung
- 14: Gaskannlinnenwandung
- 15: Zwischenwand, Nutgrundwandung
- 15.1: Vertiefung
- 16, 17: Anschlag
- 18: Sackloch (Vertiefung)

## Patentansprüche

1. Gasturbinenkanalgehäuse, insbesondere für ein Flugtriebwerk, mit einem ersten Wandsegment (1), einem zweiten Wandsegment (2) und einer Klammeranordnung, wobei das zweite Wandsegment (2) durch die Klammeranordnung mit dem ersten Wandsegment verbunden ist, und die Klammeranordnung wenigstens eine Klammer (3) und einen Bolzen (4; 4') aufweist, der eine Bohrung der Klammer durchgreift und auf einer wandsegmentabgewandten Seite der Klammer mit einer Mutter (5) verschraubt ist, die, insbesondere über ein Zwischenelement (6), wenigstens einen ersten Fuß (7, 8) der Klammer gegen das erste Wandsegment und wenigstens einen zweiten Fuß (9) der Klammer gegen das zweite Wandsegment spannt,
**dadurch gekennzeichnet, dass**
der Bolzen einen Kopf (10; 10') aufweist, der formschlüssig in einer Nut (11; 11') auf einer kanalabgewandten Außenseite des ersten Wandsegments geführt ist, und die Nut in einem vorstehenden Radialvorsprung (12) der Außenseite des ersten Wandsegments angeordnet ist.

2. Gasturbinenkanalgehäuse nach dem vorhergehenden Anspruch, **dadurch gekennzeichnet, dass** die Nut gegen eine der Außenseite gegenüberliegende Gaskanalinnenwandung (14) des ersten Wandsegments geschlossen (15) ist.

3. Gasturbinenkanalgehäuse nach einem der vorhergehenden Ansprüche, **dadurch gekennzeichnet, dass** der Bolzen lösbar, insbesondere stoffschlussfrei, in der Nut geführt ist.

4. Gasturbinenkanalgehäuse nach einem der vorhergehenden Ansprüche, **dadurch gekennzeichnet, dass** der Bolzen (4') mehrteilig ausgeführt ist und einen Gewindestift (4.1) aufweist, der mit dem in der Nut geführten Kopf (10') des Bolzens, insbesondere verdrehgesichert, verschraubt ist.

5. Gasturbinenkanalgehäuse nach einem der vorhergehenden Ansprüche, **dadurch gekennzeichnet, dass** der Bolzen formschlüssig in eine Vertiefung (15.1) in einer Nutgrundwandung (15) der Nut (11') eingreift.

6. Gasturbinenkanalgehäuse nach einem der vorhergehenden Ansprüche, **dadurch gekennzeichnet, dass** die Nut wenigstens eine, insbesondere schräge, Hinterschneidung (13; 13') in radialer Richtung aufweist, die den, insbesondere keilartigen, Kopf (10') des Bolzens in Radialrichtung formschlüssig festlegt.

7. Gasturbinenkanalgehäuse nach einem der vorhergehenden Ansprüche, **dadurch gekennzeichnet, dass** die Nut auf einer Stirnseite geschlossen oder auf beiden Stirnseiten offen ist.

8. Gasturbinenkanalgehäuse nach einem der vorhergehenden Ansprüche, **dadurch gekennzeichnet, dass** die Klammer wenigstens einen Anschlag (16, 17) aufweist, der die Nut übergreift, insbesondere einen ersten Anschlag (16) und einen zweiten Anschlag (17) aufweist, die die Nut auf einander gegenüberliegenden Seiten, insbesondere Stirnseiten, übergreifen.

9. Gasturbinenkanalgehäuse nach einem der vorhergehenden Ansprüche, **dadurch gekennzeichnet, dass** ein erster Fuß (7) der Klammer in eine Vertiefung, insbesondere ein Sackloch (18), in dem ersten Wandsegment neben der Nut eingreift.

10. Gasturbinenkanalgehäuse nach einem der vorhergehenden Ansprüche, **dadurch gekennzeichnet, dass** sich die Nut, wenigstens im Wesentlichen, in Axial- oder Umfangsrichtung erstreckt.

11. Gasturbinenkanalgehäuse nach einem der vorhergehenden Ansprüche, **dadurch gekennzeichnet, dass** das eine (1) von dem ersten und zweiten Wandsegment wenigstens ein Band, das die Außenseite und eine der Außenseite gegenüberliegende Gaskanalinnenwandung (14) des Wandsegments aufweist, und eine Radialstrebe aufweist, die an der Gaskanalinnenwandung angeordnet ist.

12. Gasturbine, insbesondere Flugtriebwerk, mit wenigstens einer Turbine und einem Gasturbinenkanalgehäuse nach einem der vorhergehenden Ansprüche, **dadurch gekennzeichnet, dass** das Gasturbinenkanalgehäuse an die wenigstens eine Turbine anschließt, vorzugsweise zwei in axialer Richtung benachbart angeordnete Turbinen strömungstechnisch miteinander verbindet.

13. Verfahren zum Montieren eines Gasturbinenkanalgehäuses nach einem der vorhergehenden Ansprüche, wobei der Kopf (10; 10') des Bolzens (4; 4') in die Nut (11; 11') eingeschoben und die Mutter (5) mit dem Bolzen verschraubt wird.

14. Verfahren zum Demontieren eines Gasturbinenkanalgehäuses nach einem der vorhergehenden Ansprüche, wobei die Mutter (5) von dem Bolzen (4; 4') und der Kopf (10; 10') des Bolzens aus der Nut (11; 11') entfernt wird.

## Claims

1. A gas turbine channel housing, in particular for an aircraft engine, having a first wall segment (1), a second wall segment (2) and a clip assembly, wherein the second wall segment (2) is connected to the first wall segment by the clip assembly and the clip assembly has at least one clip (3) and one pin (4; 4') that extends through a hole in the clip and is screwed to a side of the clip that faces away from the wall segment with a nut (5), which braces at least a first foot (7, 8) of the clip against the first wall segment and at least a second foot (9) of the clip against the second wall segment, in particular by means of an intermediate member (6),
**characterized in that**
the pin has a head (10; 10') that is positively guided within a groove (11; 11') on an outer side of the first wall segment that faces away from the channel, and the groove is arranged within a projecting radial protrusion (12) of the outer side of the first wall segment.

2. The gas turbine channel housing according to the preceding claim, **characterized in that** the groove is closed at a gas channel inner wall (14) of the first wall segment (15) that is opposite the outer side.

3. The gas turbine channel housing according to any of the preceding claims, **characterized in that** the pin is releasably guided into the groove, in particular without a material bonding.

4. The gas turbine channel housing according to any of the preceding claims, **characterized in that** the pin (4') is of multi-part design and has a threaded pin (4.1) that is screwed, specifically secured against rotation, by means of the head (10') of the pin guided into the groove.

5. The gas turbine channel housing according to any of the preceding claims, **characterized in that** the pin positively engages into a recess (15.1) in a groove base wall (15) of the groove (11').

6. The gas turbine channel housing according to any of the preceding claims, **characterized in that** the groove has at least one, in particular beveled, undercut (13; 13') in the radial direction, that positively secures the, in particular wedge-shaped, head (10') of the pin in the radial direction.

7. The gas turbine channel housing according to any of the preceding claims, **characterized in that** the groove is closed at one end face or is open at both end faces.

8. The gas turbine channel housing according to any of the preceding claims, **characterized in that** the clip has at least one stop (16, 17) that overlaps the groove, in particular a first stop (16) and a second stop (17) that overlap the groove at opposite sides, in particular end faces.

9. The gas turbine channel housing according to any of the preceding claims, **characterized in that** a first foot (7) of the clip engages into a recess, in particular a blind hole, (18) in the first wall segment next to the groove.

10. The gas turbine channel housing according to any of the preceding claims, **characterized in that** the groove extends at least essentially in the axial or circumferential direction.

11. The gas turbine channel housing according to any of the preceding claims, **characterized in that** the one (1) of the first and second wall segments has at least one band that has the outer side and a gas channel inner wall (14) of the wall segment opposing the outer side and a radial strut that is arranged on the gas channel inner wall.

12. A gas turbine, in particular an aircraft engine, having at least one turbine and one gas turbine channel housing according to any of the preceding claims **characterized in that** the gas turbine channel connects to the at least one turbine, preferably fluidically connects two turbines to each other that are arranged adjacently in the axial direction.

13. A method for mounting a gas turbine channel housing according to any of the preceding claims, wherein the head (10; 10') of the pin (4; 4') is inserted into the groove (11; 11') and the nut (5) is screwed to the pin.

14. A method for removing a gas turbine channel housing according to any of the preceding claims, wherein the nut (5) is removed from the pin (4; 4') and the head (10; 10') of the pin from the groove (11; 11').

## Revendications

1. Boîtier de conduit de turbine à gaz, en particulier pour réacteur d'avion, comprenant un premier segment de paroi (1), un second segment de paroi (2) et un dispositif de serrage, le second segment de paroi (2) étant raccordé par le dispositif de fixation au premier segment de paroi et le dispositif de fixation comprenant au moins une bride (3) et un boulon (4 ; 4') qui traverse un trou de la bride et qui est vissé sur une face détournée duegment de paroi, de la bride à un écrou (5) qui serre, en particulier par le biais d'un élément intermédiaire (6), un premier pied (7, 8) de la bride contre le premier segment de paroi et au moins un deuxième pied (9) de la bride contre le second segment de paroi,
**caractérisé en ce que**
le boulon comporte une tête (10 ; 10') qui est guidée par correspondance géométrique dans une rainure (11 ; 11') sur une face extérieure, opposée au conduit, du premier segment de paroi, et **en ce que** la rainure est disposée dans une saillie radiale proéminente (12) de la face extérieure du premier segment de paroi.

2. Boîtier de conduit de turbine à gaz selon l'une des revendications précédentes, **caractérisé en ce que** la rainure est fermée par rapport à une paroi intérieure de conduit de gaz (14) opposée à la face extérieure du premier segment de paroi (15).

3. Boîtier de conduit de turbine à gaz selon l'une des revendications précédentes, **caractérisé en ce que** le boulon est guidé de manière amovible, en particulier sans liaison de matière, dans la rainure.

4. Boîtier de conduit de turbine à gaz selon l'une des revendications précédentes, **caractérisé en ce que** le boulon (4') est réalisé en plusieurs pièces et comporte une tige filetée (4.1) qui est vissée, en particulier avec blocage anti-rotation, à la tête (10') du boulon qui est guidée dans la rainure.

5. Boîtier de conduit de turbine à gaz selon l'une des revendications précédentes, **caractérisé en ce que** le boulon s'engage par complémentarité de formes dans un creux (15.1) d'une paroi de fond (15) de la rainure (11').

6. Boîtier de conduit de turbine à gaz selon l'une des revendications précédentes, **caractérisé en ce que** la rainure présente dans la direction radiale au moins une contre-dépouille (13 ; 13'), en particulier oblique, qui bloque par complémentarité de formes la tête (10'), en particulier de type clavette, du boulon dans la direction radiale.

7. Boîtier de conduit de turbine à gaz selon l'une des revendications précédentes, **caractérisé en ce que** la rainure est fermée sur une face frontale ou ouverte sur les deux faces frontales.

8. Boîtier de conduit de turbine à gaz selon l'une des revendications précédentes, **caractérisé en ce que** la bride comporte au moins une butée (16, 17) qui est à cheval sur la rainure, en particulier une première butée (16) et une seconde butée (17) qui sont à cheval sur la rainure sur des faces opposées, en particulier des faces frontales.

9. Boîtier de conduit de turbine à gaz selon l'une des revendications précédentes, **caractérisé en ce qu'**une première patte (7) de la bride s'engage dans un creux, en particulier un trou borgne (18), ménagé dans le premier segment de paroi près de la rainure.

10. Boîtier de conduit de turbine à gaz selon l'une des revendications précédentes, **caractérisé en ce que** la rainure s'étend, au moins sensiblement, dans la direction axiale ou circonférentielle.

11. Boîtier de conduit de turbine à gaz selon l'une des revendications précédentes, **caractérisé en ce que** l'un (1) des premier et second segments de paroi comporte au moins une bande qui possède la face extérieure et une paroi intérieure de conduit de gaz (14) du segment de paroi qui est opposée à la face extérieure, , et une traverse radiale qui est disposée au niveau de la paroi intérieure de conduit de gaz.

12. Turbine à gaz, en particulier réacteur d'avion, comportant au moins une turbine et un boîtier de conduit de turbine à gaz selon l'une des revendications précédentes, **caractérisé en ce que** le boîtier de conduit de turbine à gaz se raccorde à au moins une turbine, de préférence relie fluidiquement entre elles deux turbines voisines dans la direction axiale.

13. Procédé de montage d'un boîtier de conduit de turbine à gaz selon l'une des revendications précédentes, dans lequel la tête (10 ; 10') du boulon (4 ; 4') est insérée dans la rainure (11 ; 11') et l'écrou (5) est vissé au boulon.

14. Procédé de démontage d'un boîtier de conduit de turbine à gaz selon l'une des revendications précédentes, dans lequel l'écrou (5) est enlevé du boulon (4 ; 4') et la tête (10 ; 10') du boulon (4 ; 4') est enlevée de la rainure (11 ; 11').
